# EUROPÄISCHE PATENTANMELDUNG

(11) **EP 1 460 508 A1**
(43) Veröffentlichungstag der Anmeldung: **22.09.2004**
(21) Anmeldenummer: 03005207.0
(22) Anmeldetag: 08.03.2003
(51) Int. Cl.: G06F 1/00

(54) **Benutzer-Authentifizierung durch ein drahtloses Gerät, das der Benutzer mit sich trägt; Präsenzkontrolle des Benutzers**

(71) Anmelder: c.a.r.u.s. Information Technology AG, 22848 Norderstedt (DE)
(72) Erfinder: Witt, Karl-Heinz, 22844 Norderstedt (DE); Lund, Sören, 24558 Henstedt-Ulzburg (DE); Riechen, Thomas, 24220 Flintbek (DE)
(74) Vertreter: Jaeschke, Rainer, Dipl.-Ing.

(57) **Zusammenfassung**

Die Erfindung betrifft ein System für die Kontrolle des Zugriffs durch einen Benutzer auf ein Gerät. Das System umfasst eine mit dem Gerät verbundene Kontrolleinheit, um an das Gerät wenigstens ein Zugriffsberechtigungssignal zu übertragen, und wenigstens einen mobilen Identifikationsträger, auf dem Anmeldedaten und Identifikationsdatensätze des Benutzers gespeichert sind und der mit der Kontrolleinheit drahtlos kommuniziert. Gemäß der Erfindung wird vorgeschlagen, dass die Kontrolleinheit eine Leseeinheit aufweist, die ein persönliches Identifikationsmerkmal des Benutzers erfasst. Es ist eine Programmeinheit, die anhand des Identifikationsmerkmals einen ersten Datensatz erzeugt, und eine Logikeinheit vorhanden, in welcher der erste Datensatz mit den gespeicherten Identifikationsdatensätzen verglichen wird. Bei einem erfolgreichen Vergleich des Datensatzes mit einem Identifikationsdatensatz wird ein Anmeldesignal mit den auf dem Identifikationsträger gespeicherten Anmeldedaten an die Kontrolleinheit gesandt. Das Zugriffsberechtigungssignal wird anhand der Anmeldedaten erzeugt und an das Gerät übertragen. Zusätzlich ist eine Präsenzkontrolle des Identifikationsträgers vorgesehen.

## Beschreibung

Die Erfindung betrifft ein System für die Kontrolle des Zugriffs durch einen Benutzer auf ein Gerät. Das System umfasst eine Kontrolleinheit, die mit dem Gerät verbunden ist, um an das Gerät wenigstens ein Zugriffsberechtigungssignal zu übertragen, ohne dessen Erhalt das Gerät seinen bestimmungsgemäßen Betrieb nicht aufnimmt, und wenigstens einen mobilen Identifikationsträger, auf dem Identifikationsdaten des Benutzers auslesbar gespeichert sind. Der Identifikationsträger weist einen Sender und einen Empfänger auf, die drahtlos mit einem Empfänger und einem Sender der Kontrolleinheit kommunizieren. Insbesondere betrifft die Erfindung ein Zugriffskontrollsystem für eine Datenverarbeitungsanlage oder ein Netzwerk von Datenverarbeitungsanlagen, so dass im folgenden überwiegend von einem Arbeitsplatzrechner für solche Netzwerke die Rede ist, ohne dass damit eine Beschränkung verbunden sein soll.

Insbesondere bei Arbeitsplatzrechnern, die über ein Netzwerk an zentrale Server oder Datenbanken angeschlossen sind, darf ein Zugriff nur durch berechtigte Personen möglich sein. In der Regel werden Benutzernamen und Passwörter vergeben, so dass nur bei deren Kenntnis ein Anmelden an das Netzwerk möglich ist. Ist die Person erst einmal angemeldet, kann auf den Server, auf die darauf gespeicherten Programme, Daten oder dergleichen zugegriffen beziehungsweise verarbeitet werden. Dies ist in der Regel solange möglich, bis der betreffende Benutzer sich über seinen Arbeitsplatzrechner wieder abmeldet.

Es ist allerdings nicht gewährleistet, dass eine andere Person als der Zugriffsberechtigte den Benutzernamen und das Passwort kennt und eingibt oder, dass der Arbeitsplatzrechner bei Abwesenheit des Zugriffsberechtigten durch eine andere Person benutzt wird. Dies kann durch Präsenzkontrollen verhindert werden, die die Anwesenheit einer Person erfassen und bei Abwesenheit den Arbeitsplatzrechner deaktivieren oder ein Abmelden vom Netzwerk bewirken.

Eine einfache Möglichkeit ist das Deaktivieren des Arbeitsplatzrechners nach Ablauf einer Zeitspanne ohne Eingabe. Allerdings müssen diese Zeitspannen relativ lang ausgelegt sein, um ein ungestörtes Arbeiten durch den Zugriffsberechtigten zu ermöglichen. Zudem ist ein erneutes Anmelden zum Reaktivieren des Arbeitsplatzrechners notwendig. Aufgrund der Bequemlichkeit des Benutzers, nicht ständig das Passwort einzugeben, wird dieser Mechanismus häufig deaktiviert. Zudem ist ein Missbrauch bei nur kurzer Abwesenheit nicht auszuschließen.

Die US-6,260,111 B1 beschreibt ein Zugriffskontrollsystem, bei welchem ein mobiler Identifikationsträger in einer Leseeinheit vorhanden sein muss, damit der Arbeitsplatzrechner benutzt werden kann. Hier besteht die Gefahr, dass nicht zuletzt aus Bequemlichkeit der Benutzer bei kurzer Abwesenheit oder Pausen den Identifikationsträger nicht entfernt. Der Arbeitsplatzrechner bleibt daher angemeldet und kann unbefugt bedient werden.

Aus der US-PS 6,111,517 ist ein System bekannt, bei dem das Gesicht des Benutzers laufend erfasst wird. Fehlt das Gesicht oder wird ein anderes Gesicht erkannt, wird der Arbeitsplatzrechner deaktiviert. Ein solches System ist sehr aufwendig, und ein sicheres Erfassen eines Gesichts ist bei Bewegung des Kopfs, unterschiedlichen Haltungen oder verändertem Abstand zur Kamera schwer möglich. Auch besteht die Gefahr der Täuschung durch das Vorhalten einer Abbildung der berechtigten Person.

Die US 20002/0104006 A1 beschreibt ein System, das eine Autorisierung und eine Anwesenheitskontrolle einer Person durchführt. Das System umfasst einen Identifikationsträger mit biometrischen Daten, der drahtlos mit einer Basiseinheit an einem Arbeitsplatzrechner in Verbindung steht. Sobald der Identifikationsträger für eine vorbestimmte Zeit außer Reichweite der Basiseinheit gelangt, wird der Arbeitsplatzrechner deaktiviert. Allerdings sind die Identifikationsmerkmale und -daten auf einem Server des Netzwerks vorhanden und gespeichert, so dass bereits für die Autorisierung und Identifizierung eine Verbindung zum Netzwerk bestehen muss. Ferner wird die Identifikationskontrolle auf dem Identifikationsträger selbst durchgeführt. Dieser ist entsprechend unhandlich und weist einen sehr großen Energiebedarf auf. Auch hier besteht die Gefahr, dass aufgrund der Bequemlichkeit der Identifikationsträger in Empfangsreichweite der Basiseinheit abgelegt wird, so dass der Arbeitsplatzrechner auch bei Abwesenheit der zugriffsberechtigten Person angemeldet bleibt. Ein Missbrauch ist nicht auszuschließen.

Der Erfindung liegt die Aufgabe zugrunde, ein Zugriffskontrollsystem der eingangs geschilderten Art so auszubilden, dass eine zuverlässige Identifizierung des zugriffsberechtigten Benutzers und gemäß einer weiteren Ausführungsform die Präsenzkontrolle des angemeldeten Benutzers zuverlässig möglich ist.

Die Aufgabe wird gemäß der Erfindung dadurch gelöst, dass die Kontrolleinheit wenigstens eine Leseeinheit aufweist, die mindestens ein persönliches Identifikationsmerkmal des Benutzers erfasst, das von dem Benutzer an die Leseeinheit unmittelbar übertragen oder eingegeben wird. Weiterhin ist wenigstens eine Programmeinheit vorhanden, die das eingelesene persönliche Identifikationsmerkmal in einen ersten Datensatz wandelt. Dieser wird in einer Logikeinheit mit dem auf dem Identifikationsträger entsprechend gespeicherten Identifikationsdatensatz verglichen.

Bei einem erfolgreichen Vergleich, insbesondere bei Übereinstimmung, wird ein Anmeldesignal mit den auf dem Identifikationsträger gespeicherten Anmeldedaten über den Sender des Identifikationsträgers an den Empfänger der Kontrolleinheit gesandt. Daraufhin erzeugt die Kontrolleinheit aus dem Anmeldesignal ein nach Bedarf mit den Anmeldedaten versehenes Zugriffsberechtigungssignal, das an das zu sichernde Gerät übertragen wird. Der Vorteil ist darin zu sehen, dass in dem Gerät oder auch in der Kontrolleinheit keine persönlichen Identifikationsdaten, -datensätze oder Anmeldedaten gespeichert beziehungsweise hinterlegt sind. Die Programmeinheit kann herkömmliche Verarbeitungsprogramme enthalten, die aufgrund der eingelesenen Merkmale den ersten Datensatz erzeugen. Entsprechendes gilt für die Logikeinheit, die lediglich einen Abgleich von Datensätzen, eventuell mit Toleranzgrenzen und Schwellenwerten durchführt. Persönliche Geheimnisse und Daten sind nur auf dem Identifikationsträger vorhanden und werden nur kurzfristig zur Verarbeitung abgerufen, aber nicht gespeichert.

Es kann zweckmäßig sein, dass die Programmeinheit und die Logikeinheit in der Kontrolleinheit angeordnet sind. Hierbei ist von der Kontrolleinheit ein Aufforderungssignal für den Identifikationsträger so zu erzeugen, dass der Identifikationsträger ein erstes Antwortsignal mit einem Identifikationsdatensatz an die Kontrolleinheit überträgt. Der Vergleich des eingelesenen Identifikationsmerkmals oder -datensatzes mit dem auf dem Identifikationsträger entsprechend gespeicherten Identifikationsmerkmal oder -datensatz wird dann in der Kontrolleinheit vollzogen. Bei erfolgreichem Vergleich ruft die Kontrolleinheit das Anmeldesignal vom Identifikationsträger ab. Damit können auch aufwendigere Verarbeitungs- oder Vergleichsprogramme vorgesehen werden, die eine entsprechend zuverlässige Identifikation erlauben.

Bei einem Netzwerk von Datenverarbeitungsanlagen könnte die Programmeinheit und/oder die Logikeinheit in einer gesicherten Datenverarbeitungsanlage des Netzwerks implementiert und über eine gesicherte Signalleitung mit der Kontrolleinheit verbunden sein. Dies hat den Vorteil, dass die gesamte Rechenleistung auf einen leistungsfähigen Server verlegt wird. Eine schnellere Bearbeitung der Identifikations- und Anmeldeprozedur ist damit möglich. Die Kontrolleinheit dient damit der sicheren Übertragung der auszutauschenden Datensätze und Signale zwischen Arbeitsplatzrechner und Server einerseits und Identifikationsträger andererseits.

Alternativ kann die Logikeinheit auf dem Identifikationsträger angeordnet sein, wobei der erste Datensatz an den Identifikationsträger zum Vergleich durch die Logikeinheit übertragen wird. Der Vergleich des eingelesenen Identifikationsmerkmals oder -datensatzes mit dem auf dem Identifikationsträger entsprechend gespeicherten Identifikationsmerkmal oder -datensatz wird dann auf dem Identifikationsträger vollzogen. Der Identifikationsträger erzeugt bei erfolgreichem Vergleich das Anmeldesignal. Dies hat den Vorteil, dass überhaupt keine persönlichen Identifikationsdaten mehr an die Kontrolleinheit gesandt zu werden brauchen. Ein unbefugtes Auslesen dieser Daten wird damit weitestgehend verhindert.

Eine solche Anordnung von Kontrolleinheit und Identifikationsträger hat den Vorteil, dass für die Aktivierung des Geräts zu dessen bestimmungsgemäßem Gebrauch nicht nur der zugriffsberechtigte Benutzer selbst anwesend sein muss. Auch ist es erforderlich, dass die Person einen ihn autorisierenden und identifizierenden Identifikationsträger, zum Beispiel einen sogenannten Token, mit sich führt. Erst dann kann beispielsweise die Anmeldung in ein Netzwerk durchgeführt werden. Ein besonderer Vorteil ist darin zu sehen, dass die Kontrolleinheit alle sicherheitsrelevanten Einheiten aufweist, ohne dass das zu sichernde Gerät selbst, also insbesondere der Arbeitsplatzrechner, für den Anmeldevorgang selbst benötigt wird. Ein Missbrauch des Geräts durch einen nicht autorisierten Zugriff ist daher nahezu ausgeschlossen.

Schließlich ist es vorteilhaft, dass der Identifikationsträger lediglich einen Speicher, einen Sender und Empfänger und eventuell nur eine Vergleichslogik aufweisen muss. Solche Sender und Empfänger sind aus der Transpondertechnik hinreichend bekannt und benötigen nur geringe Energie. Es kann daher sogar ausreichend sein, einen passiven Transponder einzusetzen, der von der Kontrolleinheit angeregt und mit Energie versorgt wird, die ausreicht, den erforderlichen Vergleich in der Logikeinheit durchzuführen und das Antwortsignal zurückzusenden. Ansonsten ist auch bei einem aktiven Sender nur eine Batterie geringer Leistung erforderlich. Aufgrund der Energiesparsamkeit reicht eine kleine Batterie, und der Identifikationsträger kann entsprechend klein ausgebildet sein. Ein Ablegen nur aus Bequemlichkeit ist daher nicht zu befürchten. Insbesondere kann der Identifikationsträger als Chipkarte, als Anhänger oder dergleichen ausgebildet sein, die beziehungsweise der bequem zu tragen ist.

Gemäß einer weitergehenden Ausführungsform der Erfindung umfasst die Kontrolleinheit wenigstens einen Zeitgeber, so dass zu vorbestimmbaren Zeiten, zu Zufallszeiten, periodisch oder taktweise ein Kontrollsignal erzeugt und von der Kontrolleinheit an den Identifikationsträger gesendet wird. Aufgrund des Kontrollsignals sendet der Identifikationsträger ein zweites Antwortsignal, das einen Identifikationsdatensatz enthalten kann, an die Kontrolleinheit zurück. Die Programmeinheit wertet dieses zweite Antwortsignal aus und erzeugt bei einem nicht passenden Antwortsignal ein Sperrsignal, das an das Gerät übertragen wird. Bei Ausbleiben des zweiten Antwortsignals sendet die Kontrolleinheit ebenfalls ein Sperrsignal an das Gerät. Nach dem Erhalt des Sperrsignals ist jeder weiterer Zugriff gesperrt. Dies hat den Vorteil, dass nicht nur die einmalige Identifikation erfolgt, sondern auch eine laufende Überwachung dahingehend, ob der Identifikationsträger noch vorhanden ist. Aufgrund der Tatsache, dass dieser sehr klein ist und daher für ein bequemes Arbeiten nicht abgelegt zu werden braucht, ist im wesentlichen sichergestellt, dass auch der Zugriffsberechtigte anwesend ist. Täuschungen dahingehend, dass andere Personen das Gerät mit diesem Identifikationsträger bedienen, sind daher nahezu ausgeschlossen.

Wie die drahtlose Datenübertragung erfolgt, ist grundsätzlich beliebig. Es können Übertragungen mit Infrarot, Ultraschall, Funkwellen, Wechsel-E-Feldern oder Wechsel-B-Feldern stattfinden. Auch kann vorgesehen werden, dass das Aufforderungssignal, das Kontrollsignal sowie das Anmeldesignal übereinstimmen oder unterschiedlich sind und/oder auf gleichen oder unterschiedlichen Arten, insbesondere Frequenzen oder Wellenlängen gesendet werden. Entsprechend können das erste und zweite Antwortsignal übereinstimmen oder unterschiedlich sein und/oder auf gleichen oder unterschiedlichen Arten, insbesondere Frequenzen oder Wellenlängen gesendet werden. Dadurch wird der grundsätzlich offene und abtastbare Datenaustausch weiter gesichert. Selbstverständlich kann vorgesehen werden, dass alle gesendeten, empfangenen oder zwischen der Kontrolleinheit und dem Gerät übertragenen Signale verschlüsselt sind.

Das Sperrsignal kann ein Abschalten des Geräts bewirken. Vorzugsweise wird jedoch ein Abmelden beispielsweise des Arbeitsplatzrechners vom Netzwerk erfolgen. Auch kann vorgesehen werden, dass das Sperrsignal einen weiteren Zugriff auf das Gerät ohne ein erneutes Zugriffsberechtigungssignal verhindert. Dabei kann vorgesehen werden, dass bei einem Arbeitsplatzrechner eventuell noch nicht abgeschlossene Arbeitsvorgänge nach dem erneuten berechtigten Zugriff fortgesetzt oder gespeichert werden können.

Grundsätzlich ist es aber auch möglich, dass das Gerät auf Stand-By schaltet oder dass bei einem Arbeitsplatzrechner eine weitere Benutzung nur durch die Eingabe eines Passworts oder dergleichen möglich ist. Dies hat allerdings den Nachteil, dass dieser Arbeitsplatz für andere zugriffsberechtigte Benutzer blockiert wäre. Für einen Personal-Computer kann dies hingegen ausreichend und zweckmäßig sein.

Es kann zudem bei Erhalt eines passenden zweiten Antwortsignals ein Arbeitsignal erzeugt und an das Gerät übertragen werden, wobei bei Ausbleiben des Arbeitsignals das Gerät abgeschaltet oder ein weiterer Zugriff auf das Gerät ohne ein erneutes Zugriffsberechtigungssignal verhindert wird. Auch das Gerät kann einen Zeitgeber umfassen, so dass zu vorbestimmbaren Zeiten, zu Zufallszeiten, periodisch oder taktweise ein erstes Prüfsignal erzeugt und an die Kontrolleinheit übertragen wird, um ein weiteres Arbeitsignal zu erhalten. Damit wird die Sicherheit weiter erhöht, da auch ein Unterdrücken des Sperrsignals, beispielsweise durch Abtrennen der Kontrolleinheit vom Gerät nach erfolgter Anmeldung, durch das Ausbleiben des Arbeitsignals ein Abschalten des Geräts bewirkt. Derartige sogenannte watch-dog-Funktionen sind grundsätzlich bekannt und bedürfen keiner eingehenden Erläuterung.

Es kann auch vorgesehen werden, dass das Gerät einen weiteren Zeitgeber umfasst, so dass zu vorbestimmbaren Zeiten, zu Zufallszeiten, periodisch oder taktweise ein zweites Prüfsignal erzeugt und an die Kontrolleinheit übertragen wird, um ein Präsenzsignal der Kontrolleinheit zu erhalten. Alternativ oder zusätzlich kann die Kontrolleinheit einen Zeitgeber umfassen, so dass zu vorbestimmbaren Zeiten, zu Zufallszeiten, periodisch oder taktweise ein Präsenzsignal erzeugt und an das Gerät übertragen wird. Das Ausbleiben des Präsenzsignals führt in beiden Fällen zu einem Abschalten oder zum Sperren jeglichen Zugriffs auf das zu schützende Gerät. Ein erneutes Zugriffsberechtigungssignal kann das Gerät wieder aktivieren beziehungsweise den Zugriff wieder gewähren. Dies hat den Vorteil, dass auch eine laufende Prüfung der Verbindung zwischen Kontrolleinheit und Gerät selbst erfolgt. Ein Umgehen der Zugriffskontrolle durch Abtrennen der Kontrolleinheit wird somit zuverlässig vermieden.

Welche persönlichen Identifikationsmerkmale von der Leseeinheit erfasst werden, ist grundsätzlich beliebig. Die Leseeinheit umfasst vorzugsweise einen Sensor zum Erfassen biometrischer Daten des Benutzers. Hierzu können biometrische Merkmale von wenigstens einem Fingerabdruck, einem Handabdruck, einer Netzhaut, einer Retina, einer Iris, des Gesichts, des Bluts oder der Sprache genommen werden. Solche Merkmale sind einzigartig und nur schwer zu kopieren oder nachzuahmen. Dennoch ist deren Einlesen durch entsprechende Sensoren für den Benutzer sehr bequem und sicher. Solche Sensoren und Programme zum Auswerten der Merkmale sind grundsätzlich bekannt und bedürfen daher keiner weiteren Erläuterung.

Es kann alternativ oder insbesondere zusätzlich vorgesehen werden, dass die Leseeinheit ein Tastaturfeld zum Eingeben persönlicher Codes des Benutzers umfasst. Dies hat den Vorteil, dass für einen Zugriff auf das Gerät die berechtigte Person zum Anmelden selbst anwesend sein und einen Berechtigungscode kennen muss. Der Berechtigungscode kann ein Passwort, eine Kennung oder eine PIN sein. Ein Missbrauch ist damit so gut wie ausgeschlossen.

Weiterhin kann vorgesehen werden, dass ein derartiger persönlicher Berechtigungscode nur für bestimmte Aktionen, wie digitales Signieren oder beim Zugreifen auf spezielle persönliche oder vertrauliche Daten, abgefragt wird. Somit wird ein unbeaufsichtigter Zugriff oder ein Missbrauch verhindert. Dabei werden die erforderlichen Schlüssel auf dem Identifikationsträger gespeichert und erst nach Erhalt des Codes oder der PIN abgerufen oder für eine Verschlüsselung beziehungsweise Entschlüsselung eingesetzt. Dies kann auf dem Identifikationsträger, in der Kontrolleinheit oder durch den Arbeitsplatzrechner erfolgen.

Im speziellen kann zum digitalen Signieren die Eingabe eines Berechtigungscodes gefordert werden. Hierzu wird die Eingabe des Codes oder der PIN an den Identifikationsträger übermittelt, der daraufhin den zur digitalen Signatur notwendigen Schlüssel beziehungsweise die Daten zur Signatur freigibt und an die Kontrolleinheit übermittelt. Die Kontrolleinheit signiert daraufhin den zu signierenden Datensatz. Alternativ kann vorgesehen werden, dass mit dem Code oder der PIN der zu signierende Datensatz an den Identifikationsträger übermittelt wird. Die digitale Signatur wird dann auf dem Identifikationsträger erzeugt und an die Kontrolleinheit zurückgesandt. Dies hat den weiteren Vorteil, dass die sensiblen Daten für die digitale Signatur weder in der Kontrolleinheit noch im Arbeitsplatzrechner noch in einem Server des Netzwerks abgelegt zu werden brauchen.

Auch kann der Identifikationsträger verschiedene Anmeldedaten für verschiedene Geräte oder verschiedene Zugriffe oder dergleichen enthalten. Diese können durch unterschiedliche Codes oder PINs gesichert sein. Damit ist es möglich, denselben Identifikationsträger für verschiedene Geräte oder für verschiedene Zugriffe zu verwenden. So können private Anmeldedaten für einen Zugriff auf private Vorgänge, persönliche Daten oder einen privaten Personal-Computer durch eine erste PIN und andere Anmeldedaten, die für den Zugang zu besonders sensiblen Daten erforderlich sind, durch eine zweite PIN gesichert sein. Solche persönliche Daten können Anschrift, Kreditkartennummer oder dergleichen sein. Somit wird verhindert, dass die Kontrolleinheit sämtliche persönliche Daten unkontrolliert abrufen kann.

Es kann vorgesehen werden, dass weitere digitale Schlüssel oder persönliche Datensätze auf dem Identifikationsträger gespeichert werden. Diese Schlüssel oder Daten können bei Bedarf nach einer erfolgreichen Identifizierung und/oder Anmeldung und/oder Übersendung des Zugriffsberechtigungssignals von der Kontrolleinheit abgerufen werden.

Es ist zweckmäßig, wenn die Kommunikationsreichweite zwischen Kontrolleinheit und Identifikationsträger 1,0 m bis 2,0 m beträgt. Damit wird nur eine geringe Sendeleistung benötigt. Dies ist mit Blick auf die elektromagnetische Verträglichkeit solcher Sender und Empfänger mit anderen elektronischen Geräten günstig. Auch wird für den mobilen Identifikationsträger nur eine geringe Batterie- oder Akkumulatorkapazität benötigt. Zudem wird hierdurch sichergestellt, dass der Zugriffsberechtigte stets in der Nähe des zu sichernden Geräts ist und sich nicht beispielsweise in einem Nachbarraum ohne Sichtkontakt zum Gerät befindet. Im einzelnen hängt die Reichweite jedoch von den lokalen Gegebenheiten ab, wo sich die Kontrolleinheit relativ zum Benutzer beim bestimmungsgemäßen Gebrauch des Geräts befindet. Die Reichweite ist so zu wählen, dass eine bequeme Nutzung einerseits und ein sicheres Deaktivieren andererseits bei größer werdendem Abstand erreicht wird.

Weiterhin ist es zweckmäßig, wenn aufeinanderfolgende Kontrollsignale und/oder Präsenzsignale und/oder zweite Antwortsignale und/oder Arbeitsignale und/oder Prüfsignale einen zeitlichen Abstand von 5 Sekunden bis 100 Sekunden, und vorzugsweise von 10 Sekunden bis 30 Sekunden haben. Bei besonders sensiblen Bereichen kann auch eine kürze Zeitdauer von beispielsweise nur 1 Sekunde bis 5 Sekunden erforderlich sein. Dadurch wird erreicht, dass auch bei kurzer Abwesenheit des berechtigten Benutzers das Gerät deaktiviert wird. Ein schneller unbefugter Zugriff unmittelbar nach dem Verlassen des Zugriffsberechtigten wird somit vermieden.

Es kann günstig sein, wenn die Art der Deaktivierung zeitabhängig und in Stufen erfolgt. Es kann vorgesehen werden, dass das Gerät nach 10 Sekunden für beispielsweise 5 Minuten so deaktiviert wird, dass eine Wiederaufnahme des Zugriffs nur nach Eingabe eines Passworts oder durch ein erneutes Einlesen des Identifikationsmerkmals desselben Benutzers erfolgen kann. Nach diesen 5 Minuten erfolgt eine Deaktivierung in Form eines Abmeldens derart, dass ein weiterer Zugriff nur nach vollständiger neuer Anmeldung erfolgen kann. Dieser Zustand kann beispielsweise 15 bis 30 Minuten aufrechterhalten werden. Danach kann ein vollständiges Abschalten des Geräts und auch des Systems erfolgen.

Es kann aber auch vorgesehen werden, dass beim Verlassen des Arbeitsplatzes am Gerät der gerade weggegangene Benutzer sofort abgemeldet wird. Somit steht das Gerät für den nächsten Besucher zur Verfügung. Dies ist bei häufig von verschiedenen Personen in kurzem Zeitabständen genutzten Geräten oder Arbeitsplatzrechnern zweckmäßig.

Das Gerät kann beispielsweise ein Arbeitsplatzrechner sein, über den ein Zugriff auf ein Netzwerk erfolgt. Die Anmeldung im Netzwerk erfolgt mit den Anmeldedaten, die im Anmeldesignal vom Identifikationsträger und in dem daraus erzeugten Zugriffsberechtigungssignal enthalten sind und nur nach erfolgreicher Identifizierung des Benutzers übermittelt werden. Die Anmeldeprozedur als solche entspricht grundsätzlich einer herkömmlichen Anmeldung über die Tastatur eines Arbeitsplatzrechners. Nur sind hier Eingaben an den Arbeitsplatzrechner zur Anmeldung nicht erforderlich.

Sofern die Anmeldeprozedur die Übermittlung von verschlüsselten Daten, wie beispielsweise beim KERBEROS-Verfahren, erfordert, kann der jeweils entsprechende digitale Schlüssel auf dem Identifikationsträger gespeichert sein. Weiterhin kann die Verschlüsselung über die Kontrolleinheit, die dann als Übertragungseinheit zwischen dem Arbeitsplatzrechner und dem Server des Netzwerks geschaltet ist, erfolgen. Wenn jede Datenübertragung zwischen Arbeitsplatzrechner und gesichertem Netzwerk verschlüsselt erfolgt, kann über die Kontrolleinheit sowohl das Anmelden als auch die Kommunikation eines Arbeitsplatzrechners über eine nicht gesicherte Verbindung, wie beispielsweise das Internet, mit einem sicheren Netzwerk bewirkt werden.

Das Gerät kann auch ein Personal-Computer sein. Die Anmeldung erfolgt mit Hilfe der Anmeldedaten, die im Zugriffsberechtigungssignal enthalten sind. Zudem kann das Hochlaufen des Computers gestartet werden und/oder der Zugriff auf darauf befindliche vorbestimmbare Programme des Computers und/oder der Zugriff auf vorbestimmte Speichermedien oder Daten des Computers freigegeben werden.

Gemäß einer anderen Verwendung des Systems kann vorgesehen werden, dass das Gerät ein elektronisches Schloss ist, das durch das Zugriffsberechtigungssignal öffnet oder schließt. Aufgrund des Arbeitsignals oder des Präsenzsignals bleibt das Schloss in der geöffneten beziehungsweise geschlossenen Lage und aufgrund des Sperrsignals oder des Ausbleibens des Arbeitsignals oder des Präsenzsignals schließt beziehungsweise öffnet das Schloss. Hiermit kann eine Überwachung eines Raums derart erfolgen, dass ein Raum stets verschlossen ist, wenn er nicht durch eine berechtigte Person geöffnet worden ist. Dies entspricht dem Anmeldevorgang durch das Zugriffsberechtigungssignal. Durch die laufende Prüfung auf das Vorhandensein des betreffenden Identifikationsträgers wird zudem erreicht, dass der Raum dann wieder verschlossen wird, wenn die betreffende zugangsberechtigte Person den Raum verlässt.

Das Schloss ist vorzugsweise Bestandteil einer sich selbsttätig schließenden Tür. Die geschlossene Lage einer solchen Tür kann leicht überwacht werden. Damit ist zusammen mit dem erfindungsgemäßen Kontrollsystem gewährleistet, dass die Tür stets zu und bei Abwesenheit der zugangsberechtigten Person auch verschlossen und verriegelt ist. Ein unbefugter Zutritt wird zuverlässig verhindert.

Die Kontrolleinheit mit der Leseeinheit und dem Sender und dem Empfänger sowie den weiterhin darin vorgesehenen Einheiten, insbesondere Programmeinheit, Logikeinheit, Zeitgebereinheit, sind in einem vom Gerät unabhängigen Gehäuse angeordnet. Das Gehäuse kann zusätzlich besonders gesichert sein. Es kann aber auch zweckmäßig sein, lediglich den Sensor oder das Eingabefeld der Leseeinheit erreichbar zu gestalten. Ein gewaltsames Öffnen und Beschädigen der Kontrolleinheit für einen Zugriff auf die implementierte Software zum Anmelden wird damit wesentlich erschwert.

Es ist weiterhin günstig, wenn die Übertragung des Zugriffsberechtigungssignals, des Prüfsignals, des Arbeitsignals, des Präsenzsignals und des Sperrsignals über Standardschnittstellen des Geräts erfolgt. Diese Übertragung hat den Vorteil, dass an dem Gerät selbst keine Änderungen vorgenommen werden müssen. Es ist lediglich erforderlich, das Gerät derart zu programmieren, dass es mit der Kontrolleinheit kommunizieren kann. Damit ist das System mit einer solchen Kontrolleinheit universell einsetzbar.

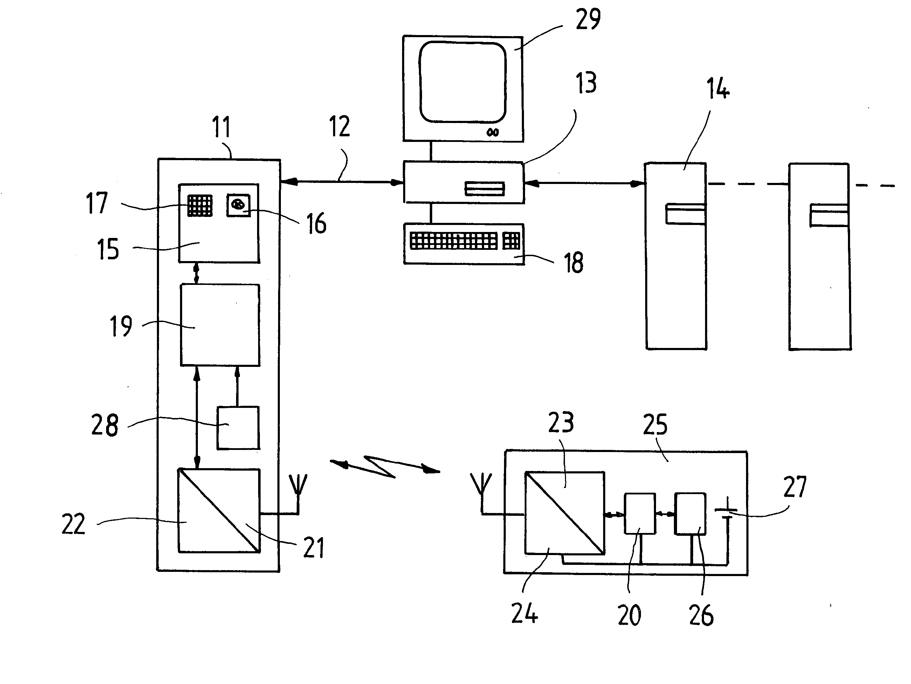

Die Erfindung wird im folgenden anhand der schematischen Zeichnung näher erläutert. Die einzige Figur zeigt ein Blockschaltbild des erfindungsgemäßen Zugriffskontrollsystems.

Das in der Zeichnung dargestellte Zugriffskontrollsystem umfasst eine Kontrolleinheit 11, die über eine Signalleitung 12 mit einem zu sichernden Gerät verbunden ist. Das Gerät ist bei dem gezeigten Ausführungsbeispiel als Arbeitsplatzrechner 13 für ein Netzwerk mit zentralen Servern 14 ausgebildet. Die Signalleitung 12 ist vorzugsweise über Standardschnittstellen, wie USB, RS232C oder dergleichen mit dem Arbeitsplatzrechner verbunden. Insbesondere bei Arbeitsplatzrechnern, durch die ein Zugriff auf ein Netzwerk und dem Server mit zu schützenden Daten erfolgen kann, ist es erforderlich, diesen Zugriff nur berechtigten Personen zu gestatten. Ein Einsatz eines Zugriffskontrollsystem beispielsweise im medizinischen Bereich oder im Finanzwesen ist daher zweckmäßig. Grundsätzlich kann durch die Kontrolleinheit aber auch jedes andere Gerät, beispielsweise eine Maschine, ein Fahrzeug, ein Schloss oder dergleichen vor einem unbefugten Zugriff gesichert werden.

Die zum Arbeitsplatzrechner in der Zeichnung vergrößert dargestellte Kontrolleinheit 11 weist eine Leseeinheit 15 auf, über die wenigstens ein persönliches Identifikationsmerkmal eines Zugriff wünschenden Benutzers erfassbar und einlesbar ist. Dieses Identifikationsmerkmal kann beispielsweise ein Fingerabdruck sein, der über einen biometrischen Sensor 16 erfasst wird. Auch kann die Stimme aufgenommen oder die Netzhaut abgetastet und ausgewertet werden. Schließlich ist es möglich, dass die Leseeinheit ein Tastaturfeld 17 hat, über das ein Benutzercode oder eine PIN eingebbar ist. Bei Arbeitsplatzrechnern oder separaten Personal-Computern kann auch vorgesehen werden, dass ein solcher Code über dessen Tastatur 18 eingegeben wird. Allerdings ist ein separates Tastaturfeld an der Kontrolleinheit für die Eingabe der PIN für eine digitale Signatur nicht zuletzt aus rechtlichen Gründen vorzuziehen.

Alternativ kann die Kontrolleinheit selbst als Computer-Tastatur mit einem biometrischen Sensor ausgebildet sein. Auch kann vorgesehen werden, dass die Kontrolleinheit oder zumindest der biometrische Sensor in der Computer-Maus integriert ist.

Die Kontrolleinheit umfasst ferner eine Programmeinheit 19, durch welche das erfasste Identifikationsmerkmal ausgewertet wird. Insbesondere ist vorgesehen, dass durch die Programmeinheit 19 ein biometrisches Merkmal des Benutzers in charakteristische Datensätze, beispielsweise die Minutien von Fingerabdrücken, umgerechnet wird, die Grundlage für eine Vergleichsoperation sein können. Diese Datensätze liegen zumindest bei der Übertragung vorzugsweise in verschlüsselter Form vor.

Die Programmeinheit 19 ist mit einem Sender 21 und einem Empfänger 22 verbunden, die drahtlos mit einem Empfänger 23 und einem Sender 24 eines mobilen Identifikationsträgers 25 kommunizieren. Sender 21, 24 und Empfänger 22, 23 können jeweils eine bauliche Einheit bilden. Als drahtlose Kommunikation können Funkverbindungen, Infrarotstrahlen, elektromagnetische Strahlen, Schall oder dergleichen zum Einsatz kommen. Die übertragenen Signale sind vorzugsweise verschlüsselt. Die dafür benötigten Techniken sind grundsätzlich bekannt und bedürfen keiner näheren Erläuterung.

Der in der Zeichnung zur Kontrolleinheit 15 vergrößert dargestellte mobile Identifikationsträger 25 ist beispielweise als handlicher Token in Form einer Chipkarte ausgebildet. Er umfasst ein Speichermedium 26, auf dem Identifikationsdatensätze und Anmeldedaten des Benutzers über den Sender 24 und Empfänger 23 abrufbar oder aussendbar sind. Dazu kann eine herkömmliche Transpondertechnik mit einem aktiven oder passiven Transponder eingesetzt werden. Der Token umfasst vorzugsweise eine Stromversorgung 27, die als Batterie oder als Akkumulator ausgebildet sein kann. Auch ist eine lichtempfindliche, stromerzeugende Zelle oder eine induktive Aufladung eines Akkumulators oder Kondensators denkbar. Letzteres hat den Vorteil, dass der Identifikationsträger wasserdicht, beispielsweise eine in Kunststoff eingeschweißte Karte ohne freie elektrische Kontakte für einen Anschluss an ein Ladegerät sein kann. Auch kann die Energieversorgung nur über die Kontrolleinheit während der Kommunikation mit dem Identifikationsträger induktiv erfolgen. Dann kann auf eine separate Energieversorgung in dem Identifikationsträger verzichtet werden.

Weiterhin ist eine Logikeinheit 20 auf dem Identifikationsträger vorhanden, die einen Vergleich der gespeicherten Datensätze und der empfangenen Datensätze durchführt. Nach dem Erfassen und Auswerten der vom Benutzer eingegebenen biometrischen Merkmale oder Codes in der Programmeinheit 19 wird von der Kontrolleinheit der erste Datensatz erzeugt. Dieser wird an den Identifikationsträger übertragen und mit dem entsprechend gespeicherten Datensatz verglichen. Bei einem passenden Datensatz wird der Benutzer eindeutig identifiziert und grundsätzlich für einen Zugriff zugelassen. Es wird dann ein Anmeldesignal erzeugt, dass die Anmeldedaten des Benutzers von dem Identifikationsträger an die Kontrolleinheit überträgt. Hieraus wird ein Zugriffsberechtigungssignal erzeugt, das an das Gerät übertragen wird. Ist der Benutzer auch tatsächlich zugriffsberechtigt, kann beispielsweise der Arbeitsplatzrechner 13 hochgefahren werden oder die Anmeldung zu dem Netzwerk erfolgen. Das Gerät, beispielsweise der Arbeitsplatzrechner, ist danach betriebsbereit.

Es werden bei dieser Ausführungsform keine persönlichen Identifikationsdaten ausgetauscht, sondern lediglich Ergebnisse von Berechnungen. Dies hat den Vorteil, dass in der Programmeinheit lediglich Umrechnungsalgorithmen durchlaufen werden, ohne dass persönliche Identifikationsdaten in einem Speicher abgelegt sind. Ein unbefugtes Auslesen solcher Daten wird somit wesentlich erschwert. Selbstverständlich können alle Daten und Datensätze sowie Umrechnungsalgorithmen verschlüsselt sein.

Neben einer erstmaligen oder einmaligen Kontrolle der Zugriffsberechtigung ist es aber bei der Bearbeitung von sensiblen Daten auch wichtig, sicherzustellen, dass der einmal den Zugriff erhaltene Benutzer im wesentlichen laufend auch am Arbeitsplatzrechner anwesend ist. Es muss sichergestellt sein, dass bei Abwesenheit des angemeldeten Benutzers kein anderer, auch wenn er prinzipiell die Berechtigung hätte, Zugriff auf den freigegebenen Arbeitsplatzrechner hat.

Zur Anwesenheitskontrolle ist ein Zeitgeber 28 vorgesehen, um zyklisch oder unregelmäßig die Anwesenheit des Benutzers abfragen zu können. Im einzelnen wird hierbei so vorgegangen, dass zyklisch oder unregelmäßig ein Kontrollsignal durch die Programmeinheit 19 erzeugt und über den Sender 21 an den Identifikationsträger 25 gesandt wird. Nach einer möglichen Prüfung des Identifikationsträgers, ob dieses Signal tatsächlich von der zugeordneten Kontrolleinheit stammt, überträgt der Identifikationsträger ein zweites Antwortsignal an die Kontrolleinheit. Kann das zweite Antwortsignal dem angemeldeten Benutzer zugeordnet werden, bleibt dieser am Arbeitsplatzrechner 13 angemeldet.

Aufgrund der Tatsache, dass im Identifikationsträger nur ein Speichermedium, ein relativ kleiner Sender und Empfänger, eine Logikeinheit und eine Batterie enthalten sind, kann der Identifikationsträger sehr klein und handlich sein. Es besteht daher keine Notwendigkeit, dass dieser Identifikationsträger beim Arbeiten abgelegt wird. Insbesondere muss der Identifikationsträger auch nicht zur Identifikation des Benutzers in eine Leseeinheit eingeführt werden. Die Datenübertragung erfolgt drahtlos, so dass von der Person erwartet werden kann, dass sie den Identifikationsträger stets bei sich tragen kann. Es ist daher im wesentlichen sichergestellt, dass bei anwesenden Identifikationsträger auch die ihm zugeordnete Person anwesend ist. Bei einem abhanden gekommenen Identifikationsträger kann aber auch kein Zugriff erfolgen, da dieser erst nach Eingabe einer PIN oder nach Erfassen eines persönlichen biometrischen Merkmals freigeben wird, die nur durch den Berechtigten selbst bewirkt werden kann.

Wird kein Antwortsignal empfangen oder stimmen die Identifikationsdaten des Antwortsignals nicht mit den erwarteten Identifikationsdaten überein, erfolgt ein Sperren des Arbeitsplatzrechners. Dazu wird ein Sperrsignal erzeugt, das an den Arbeitsplatzrechner über die Signalleitung 12 übertragen wird. Das Sperrsignal bewirkt ein Sperren des Arbeitsplatzrechners für einen Benutzer. Dies kann in einer einfachen Ausführungsform durch einen kennwortgeschützten Bildschirmschoner für den Monitor 29 erfolgen. Es kann aber auch ein Herunterfahren, ein Abmelden oder ein Abschalten des Arbeitsplatzrechners bewirkt werden. Grundsätzlich kann vor dem Abmelden auch ein Alarmsignal erzeugt und/oder auf dem Arbeitsplatzrechner 13 oder Server 14 abgelegt werden. Insbesondere kann vorgesehen werden, dass bei einem nicht passenden Antwortsignal die darin enthaltenen Identifikationsdaten eines Dritten gespeichert werden. Dann ist es möglich, diesen Dritten später zu identifizieren.

Mit diesem System kann eine sichere Kontrolle des Zugriffs auf ein Gerät und insbesondere auf ein Netzwerk mit den zu schützenden Daten und dergleichen erreicht werden. Es ist zum einen sichergestellt, dass für das erstmalige Anmelden die zugriffsberechtigte Person tatsächlich anwesend ist und durch ihr persönliches Merkmal und ihren Identifikationsträger eindeutig identifiziert wird. Zum anderen wird anschließend die kontinuierliche Anwesenheit des Identifikationsträgers laufend geprüft. Bei besonders sensiblen Daten kann zudem vorgesehen werden, dass beispielsweise zyklisch oder zufallsbedingt und vorzugsweise in größeren Zeitabständen erneut die Eingabe eines biometrischen Merkmals über die Leseeinheit oder aber die Eingabe eines persönlichen Codes angefordert wird. Dann wird in einem erhöhten Maße sichergestellt, dass tatsächlich die zugriffsberechtigte Person und nicht nur der Identifikationsträger laufend anwesend ist.

Es kann weiterhin vorgesehen werden, dass auf dem Identifikationsträger ein digitaler Schlüssel zum Erzeugen einer digitalen Signatur, ein sogenanntes Zertifikat, vorhanden ist oder abgelegt wird. Dieser digitale Schlüssel wird erst nach der Eingabe oder dem Erfassen eines weiteren persönlichen Codes oder biometrischen Merkmals an die Kontrolleinheit zum digitalen Signieren übertragen. Es kann auch vorgesehen werden, dass ein zu signierender Datensatz nach der Eingabe oder dem Erfassen eines weiteren persönlichen Codes oder biometrischen Merkmals vom Identifikationsträger signiert wird. Ein Dokument oder eine Datei kann dann in besonders sicherer Weise digital signiert werden, da das betreffende Zertifikat nur auf dem Identifikationsträger vorhanden ist, nicht abgerufen wird und somit nicht auslesbar ist.

Die Anmeldung für einen Zugriff kann aufgrund einer manuellen Aktivierung des Kontrollsystem durch den Benutzer erfolgen. Dazu kann beispielsweise das System eingeschaltet oder über einen Tastenbefehl aktiviert werden. Es ist aber auch möglich, dass ein aktiviertes Kontrollsystem einen Identifikationsträger im Empfangsbereich erfasst und selbsttätig die Anmeldung für den Zugriff startet. Bei einem Arbeitsplatzrechner können die entsprechenden Aufforderungen und Anleitungen auf dessen Monitor abbildet werden. Es ist hierbei günstig, wenn diese selbsttätige Aktivierung nur dann erfolgt, wenn kein anderer Benutzer bereits am Arbeitsplatzrechner angemeldet ist beziehungsweise das Gerät benutzt wird. Eine Störung des Benutzers durch hinzutretende Personen wird somit vermieden.

Das System kann beispielsweise für Arbeitsplatzrechner in Krankenhäusern eingesetzt werden. Hier wird häufig ein einziger Arbeitsplatzrechner vom Klinikpersonal, von Stationsschwestern oder Ärzten für einen Zugriff auf einen Server eines Netzwerks benutzt. Es ist erforderlich, dass ein Benutzer schnell Eingaben machen oder Daten abrufen kann. Weiterhin müssen einzelne Benutzer identifiziert werden, damit sie nur mit den Daten, für die sie auch nur die Berechtigung haben, arbeiten dürfen. Zudem muss sichergestellt sein, dass der Arbeitsplatzrechner unmittelbar nach Verlassen einem Unbefugten nicht mehr zur Verfügung steht. Schließlich muss nach einer berechtigten Benutzung der Arbeitsplatzrechner für einen anderen berechtigten Benutzer schnell wieder zugänglich sein.

Diesen Anforderungen genügt das System vollkommen. Die grundsätzlich zugriffsberechtigten Personen besitzen einen entsprechenden Identifikationsträger und führen ihn mit sich. Die Anmeldung zum Server erfolgt nach dem Einlesen eines Fingerabdrucks oder eines anderen eingelesenen Identifikationsmerkmals automatisch. Durch die Wahl eines entsprechenden zeitlichen Abstands der Arbeits-, Kontroll- oder Präsenzsignale wird zudem der Benutzer unmittelbar nach dem Verlassen des Arbeitsplatzrechners abgemeldet und ein neues Anmelden für den nachfolgenden Benutzer kann erfolgen. Ein unbefugter Zugriff ist zu keiner Zeit möglich. Auch bleibt der Arbeitsplatzrechner nicht im Netzwerk angemeldet, wenn beispielsweise aufgrund eines Notfalls die Person umgehend den Arbeitsplatz verlassen muss.

Es kann zudem auch ein Speicher in der Kontrolleinheit vorhanden sein, in dem alle grundsätzlich zugriffsberechtigten Personen oder Identifikationsträger gespeichert sind. Damit ist es möglich, dass für Grundfunktionen des Geräts oder des Arbeitsplatzrechners eine Freigabe auch dann erfolgt, wenn lediglich ein Benutzer ein persönliches Merkmal eingibt oder ein persönliches Merkmal erfasst wird. Auch kann ein gültiger Identifikationsträger dann ausreichend sein, um auf diese Grundfunktionen zugreifen zu können. Diese Freigabe kann beispielsweise zeitlich oder auf bestimmte Identifikationsträger begrenzt werden, die zu Wartungszwecken ausgegeben werden. Die gesicherte Identifizierung und die gesicherte Anmeldung erfolgt dann in der beschriebenen Weise.

## Patentansprüche

1. System für die Kontrolle des Zugriffs durch einen Benutzer auf ein Gerät, insbesondere auf eine Datenverarbeitungsanlage oder ein Netzwerk von Datenverarbeitungsanlagen oder einen Arbeitsplatzrechner (13), welches System eine Kontrolleinheit (11), die mit dem Gerät verbunden ist, um an das Gerät wenigstens ein Zugriffsberechtigungssignal zu übertragen, ohne dessen Erhalt das Gerät seinen bestimmungsgemäßen Betrieb nicht aufnimmt, und wenigstens einen mobilen Identifikationsträger (25) aufweist, auf dem Anmeldedaten und Identifikationsdatensätze des Benutzers gespeichert sind und der einen Sender (24) und einen Empfänger (23) aufweist, die mit einem Empfänger (22) beziehungsweise einem Sender (21) der Kontrolleinheit drahtlos kommunizieren, **dadurch gekennzeichnet, dass**
die Kontrolleinheit wenigstens eine Leseeinheit (15) aufweist, die wenigstens ein persönliches Identifikationsmerkmal des Benutzers erfasst, das von dem Benutzer an die Leseeinheit unmittelbar übertragen oder eingegeben wird,
dass wenigstens eine Programmeinheit (19) vorhanden ist, die anhand des eingelesenen persönlichen Identifikationsmerkmals einen ersten Datensatz erzeugt,
dass wenigstens eine Logikeinheit vorhanden ist, in welcher der erste Datensatz mit den auf dem Identifikationsträger gespeicherten Identifikationsdatensätzen verglichen wird,
und dass bei Übereinstimmung des ersten Datensatzes mit einem gespeicherten Identifikationsdatensatz ein Anmeldesignal mit den auf dem Identifikationsträger gespeicherten Anmeldedaten über den Sender des Identifikationsträgers an den Empfänger der Kontrolleinheit gesandt und das Zugriffsberechtigungssignal mit den Anmeldedaten erzeugt und an das Gerät übertragen wird.

2. System nach Anspruch 1, **dadurch gekennzeichnet, dass** die Programmeinheit und die Logikeinheit in der Kontrolleinheit angeordnet sind, dass ein Aufforderungssignal erzeugt und an den Identifikationsträger übertragen wird, woraufhin ein erstes Antwortsignal mit wenigstens einem Identifikationsdatensatz zum Vergleich in der Logikeinheit an die Kontrolleinheit übertragen wird, die bei Übereinstimmung das Anmeldesignal vom Identifikationsträger abruft.

3. System nach Anspruch 1, **dadurch gekennzeichnet, dass** die Logikeinheit auf dem Identifikationsträger angeordnet ist, und dass der erste Datensatz an den Identifikationsträger zum Vergleich in der Logikeinheit übertragen wird, die bei Übereinstimmung das Anmeldesignal erzeugt.

4. System nach Anspruch 1, **dadurch gekennzeichnet, dass** die Programmeinheit und/oder die Logikeinheit in einer gesicherten Datenverarbeitungsanlage des Netzwerks implementiert sind und über eine gesicherte Signalleitung mit der Kontrolleinheit verbunden sind.

5. System nach einem der Ansprüche 1 bis 4, **dadurch gekennzeichnet, dass** wenigstens ein Zeitgeber (28) vorhanden ist, so dass zu vorbestimmbaren Zeiten, zu Zufallszeiten, periodisch oder taktweise ein Kontrollsignal erzeugt und über den Sender (21) der Kontrolleinheit an den Empfänger (24) des Identifikationsträger übertragen wird, worauf ein zweites Antwortsignal mit einem auf dem Identifikationsträger gespeicherten Identifikationsdatensatz über den Sender des Identifikationsträgers an den Empfänger der Kontrolleinheit gesandt und ausgewertet wird, und dass bei Ausbleiben des zweiten Antwortsignals oder bei einem nicht passenden Antwortsignal ein Sperrsignal erzeugt und an das Gerät übertragen wird.

6. System nach einem der Ansprüche 1 bis 5, **dadurch gekennzeichnet, dass** das Sperrsignal einen weiteren Zugriff auf das Gerät ohne ein erneutes Zugriffsberechtigungssignal verhindert.

7. System nach einem der Ansprüche 1 bis 6, **dadurch gekennzeichnet, dass** das Sperrsignal ein Abschalten des Geräts bewirkt.

8. System nach einem der Ansprüche 1 bis 7, **dadurch gekennzeichnet, dass** bei Erhalt eines passenden zweiten Antwortsignals ein Arbeitsignal erzeugt und an das Gerät übertragen wird, wobei bei Ausbleiben des Arbeitsignals das Gerät abgeschaltet oder ein weiterer Zugriff auf das Gerät ohne ein erneutes Zugriffsberechtigungssignal verhindert wird.

9. System nach einem der Ansprüche 1 bis 8, **dadurch gekennzeichnet, dass** das Gerät einen Zeitgeber umfasst, so dass zu vorbestimmbaren Zeiten, zu Zufallszeiten, periodisch oder taktweise ein erstes Prüfsignal erzeugt und an die Kontrolleinheit übertragen wird, um ein weiteres Arbeitsignal zu erhalten.

10. System nach einem der Ansprüche 1 bis 9, **dadurch gekennzeichnet, dass** die Kontrolleinheit einen Zeitgeber umfasst, so dass zu vorbestimmbaren Zeiten, zu Zufallszeiten, periodisch oder taktweise ein Präsenzsignal erzeugt und an das Gerät übertragen wird, wobei bei Ausbleiben des Präsenzsignals das Gerät abgeschaltet oder ein weiterer Zugriff auf das Gerät ohne ein erneutes Zugriffsberechtigungssignal verhindert wird.

11. System nach einem der Ansprüche 1 bis 10, **dadurch gekennzeichnet, dass** das Gerät einen Zeitgeber umfasst, so dass zu vorbestimmbaren Zeiten, zu Zufallszeiten, periodisch oder taktweise ein zweites Prüfsignal erzeugt und an die Kontrolleinheit übertragen wird, um ein Präsenzsignal der Kontrolleinheit zu erhalten, wobei bei Ausbleiben des Präsenzsignals das Gerät abgeschaltet oder ein weiterer Zugriff auf das Gerät ohne ein erneutes Zugriffsberechtigungssignal verhindert wird.

12. System nach einem der Ansprüche 1 bis 11, **dadurch gekennzeichnet, dass** die Leseeinheit (15) einen Sensor (16) zum Erfassen biometrischer Daten des Benutzers, insbesondere wenigstens eines Fingerabdrucks, eines Handabdrucks, der Retina, der Iris, der Netzhaut, des Gesichts, des Bluts oder der Sprache umfasst.

13. System nach einem der Ansprüche 1 bis 12, **dadurch gekennzeichnet, dass** die Leseeinheit (15) ein Tastaturfeld (17) zum Eingeben persönlicher Codes oder einer PIN des Benutzers umfasst.

14. System nach einem der Ansprüche 1 bis 13, **dadurch gekennzeichnet, dass** die Sende- und Empfangsreichweite zwischen Kontrolleinheit und Identifikationsträger weniger als 4 m und insbesondere 1 m bis 2 m beträgt.

15. System nach einem der, Ansprüche 1 bis 14, **dadurch gekennzeichnet, dass** aufeinanderfolgende Kontrollsignale und/oder Präsenzsignale und/oder zweite Antwortsignale und/oder Arbeitsignale und/oder Prüfsignale einen zeitlichen Abstand von 1 Sekunde bis 5 Sekunden oder 5 Sekunden bis 100 Sekunden und vorzugsweise von 10 Sekunden bis 30 Sekunden haben.

16. System nach einem der Ansprüche 1 bis 15, **dadurch gekennzeichnet, dass** das Gerät ein Arbeitsplatzrechner (13) ist, über den ein Zugriff auf ein Netzwerk (14) erfolgt, und dass durch das Zugriffsberechtigungssignal die Anmeldung zum Netzwerk erfolgt.

17. System nach einem der Ansprüche 1 bis 16, **dadurch gekennzeichnet, dass** das Gerät ein Personal-Computer ist, und dass durch das Zugriffsberechtigungssignal die Anmeldung an den Personal Computer erfolgt.

18. System nach einem der Ansprüche 1 bis 17, **dadurch gekennzeichnet, dass** auf dem Identifikationsträger wenigstens ein digitaler Schlüssel abgelegt ist, der nicht mit dem Anmeldesignal an die Kontrolleinheit übertragen wird, wobei der digitale Schlüssel nur bei Bedarf zum Ver- oder Entschlüsseln von zum Identifikationsträger übertragenen Datensätzen einsetzbar oder von der Kontrolleinheit zum Ver- oder Entschlüsseln von Datensätzen abrufbar ist.

19. System nach einem der Ansprüche 1 bis 18, **dadurch gekennzeichnet, dass** auf dem Identifikationsträger persönliche Daten abgelegt sind, die nicht mit dem Anmeldesignal an die Kontrolleinheit übertragen werden, wobei die Daten nur bei Bedarf von der Kontrolleinheit abrufbar sind.

20. System nach Anspruch 18 oder 19, **dadurch gekennzeichnet, dass** der digitale Schlüssel oder die persönlichen Daten erst nach der Eingabe oder dem Erfassen eines weiteren persönlichen Codes oder biometrischen Merkmals einsetzbar oder an die Kontrolleinheit übertragbar oder abrufbar ist.

21. System nach einem der Ansprüche 1 bis 17, **dadurch gekennzeichnet, dass** auf dem Identifikationsträger ein Datensatz zum Erzeugen einer digitalen Signatur vorhanden ist, der erst nach der Eingabe oder dem Erfassen eines weiteren persönlichen Codes oder biometrischen Merkmals an die Kontrolleinheit übertragbar ist, oder dass ein zu signierender Datensatz nach der Eingabe oder dem Erfassen eines weiteren persönlichen Codes oder biometrischen Merkmals zum Identifikationsträger übertragbar und signiert und die Signatur zurück an die Kontrolleinheit übertragbar ist.

22. System nach einem der Ansprüche 1 bis 15, **dadurch gekennzeichnet, dass** das Gerät ein elektronisches Schloss ist, das durch das Zugriffsberechtigungssignal öffnet oder schließt.

23. System nach Anspruch 22, **dadurch gekennzeichnet, dass** das Schloss aufgrund des Arbeitsignals oder Präsenzsignals in der geöffneten beziehungsweise geschlossenen Lage bleibt und aufgrund des Sperrsignals oder Ausbleiben des Arbeitsignals oder Präsenzsignals schließt beziehungsweise öffnet.

24. System nach einem der Ansprüche 22 oder 23, **dadurch gekennzeichnet, dass** das Schloss Bestandteil einer sich selbsttätig schließenden Tür ist.

25. System nach einem der Ansprüche 1 bis 24, **dadurch gekennzeichnet, dass** die Übertragung des Zugriffsberechtigungssignals, des Prüfsignals, des Arbeitsignals, des Präsenzsignals und des Sperrsignals über Standardschnittstellen des Geräts erfolgt.
